# EUROPEAN PATENT SPECIFICATION

(11) **EP 3 239 513 B1**
(45) Date of publication and mention of the grant of the patent: **10.06.2020**
(21) Application number: 16166835.5
(22) Date of filing: 25.04.2016
(51) Int. Cl.: F02M 21/02, F02M 55/00, F16K 1/46, F16K 13/02

(54) **VALVE CLOSURE MEMBER WITH AN ELASTOMERIC SEAL, VALVE ASSEMBLY AND FLUID INJECTOR**
VENTILVERSCHLUSSELEMENT MIT ELASTOMERDICHTUNG, VENTILANORDNUNG UND FLUIDINJEKTOR
ÉLÉMENT DE FERMETURE DE SOUPAPE AVEC UN JOINT ÉLASTOMÈRE, ENSEMBLE DE SOUPAPE ET INJECTEUR DE FLUIDE

(43) Date of publication of application: 01.11.2017
(73) Proprietor: Vitesco Technologies GmbH, 30165 Hannover (DE)
(72) Inventor: Grandi, Mauro, 57128 Livorno (IT); Hornby, Michael J., Williamsburg, VA, 23188 (US); Komischke, Thomas, 12355 Berlin (DE); Heukenroth, Christoph, 10179 Berlin (DE)

(56) References cited:
- DE-A1- 10 319 920
- DE-A1- 10 353 011
- DE-A1-102013 202 599
- JP-A- 2015 045 309
- JP-A- 2015 078 625
- US-A- 2 850 260
- US-A- 4 922 957
- US-A- 4 962 911
- US-A- 5 618 027
- US-A1- 2013 192 555
- US-A1- 2014 084 202

## Description

The present disclosure relates to a valve assembly and to a fluid injector with an elastomeric seal.

A valve body with a vulcanized elastomeric seal is known in the art from DE 10 2006 006 883 A1. Other fluid valves comprising elastomeric seals are known from US 5,618,027 A, US 4,922,957 A and US 2014/0084202 A1.

JP 2015 045309 A discloses a fuel injection valve including an injection hole body having an injection hole from which gas fuel is injected, and a seal material mounted on a valve element for closely contacting the injection hole body to close the injection hole. The valve element has a center passage through which the fuel is distributed along a center axis of the valve element, and a branch passage branching from the center passage. The seal material is shaped annularly extending around the center passage to function to seal the fuel distributed through the center passage from the annular inside and seal the fuel distributed through the branch passage from the annular outside.

JP 2015 078625 A discloses a fuel injection valve comprising a plate part formed with an injection hole to which gaseous fuel is injected, and a valve body which operates so as to open and close the injection hole. The injection hole is formed so that the gaseous fuel immediately after injection is annularly distributed around a center axial line of the plate part.

DE 10 2013 202599 A1 discloses a sealing element having a base body with a sealing surface, where the base body comprises a first sealing area and a second sealing area spaced from the first sealing area. A first thickness of the sealing element to the first sealing area is different from a second thickness on the second sealing area, where the first sealing area is separated from the second sealing area by a shoulder . A rear side is provided on the base body perpendicular to the longitudinal axis of the sealing element.

DE 103 53 011 A1 discloses a valve for controlling a medium, in particular, a gas, comprising a sealing element which is made of a plastic material provided with a filler for purposes of an improved wear resistance.

DE 103 19 920 A1 discloses a valve for controlling of a fluid, in particular with electromagnetic operation, comprising a valve closing member, which controls a fluid flow from an inlet side to an outlet side and which cooperates with a valve seat, embodied as a flat seat on a valve plate.

It is an object of the present disclosure to provide an improved valve assembly and an improved fluid injector. This object is achieved by a valve assembly and a fluid injector having the features of the independent claim. Advantageous embodiments and developments are specified in the dependent claims, in the following description and in the drawings.

According to one aspect, a valve assembly comprising a valve closure member is disclosed, in particular for an injection valve of an internal combustion engine or the like. The valve assembly further provides a valve seat and an orifice. The valve closure member is movable relative to the valve seat for sealing and unsealing the orifice. In one embodiment, the valve assembly comprises a fluid tube. The valve seat and the orifice are positionally fix with respect to the fluid tube and may expediently be arranged at one axial end of the fluid tube . The valve closure member may expediently be received in the fluid tube and displaceable relative to the fluid tube in reciprocating fashion for sealing and unsealing the orifice. According to a second aspect, a fluid injector comprising the valve assembly is disclosed. The fluid injector is in particular an injector for injecting gaseous fuels, for example CNG.

The valve closure member of the valve assembly comprises a valve body and an elastomeric seal connected to the valve body.

Hereinafter, the valve body may be also referred to as a "component" and the valve closing member also as a "unit". The valve body may, for example, represent a valve needle and/or a solenoid armature, in particular for an injection valve of an engine.

The valve body extends along a longitudinal axis from a first longitudinal end to a second longitudinal end in longitudinal direction. Between its longitudinal ends, it preferably has a bearing surface which is oriented perpendicular, inclined or curved to the longitudinal axis and faces towards the first longitudinal end. Preferably, the bearing surface is an annular surface. The valve body may be made of metal or plastic, for example. It is preferred that the valve body is a one-pieced and integrally formed part. In other words, the valve body is preferably made from a single workpiece, i.e. not assembled from a plurality of pre-manufactured parts. For example, the valve body is a cast, deep-drawn, cold-formed or machined metal part. A one-piece design of the valve body advantageously allows smaller dimensional tolerances at a comparatively lower production cost compared to a multi-part design, and thus an optimal functioning in an injection valve.

The elastomeric seal is arranged on the second longitudinal end, on a front surface of the valve body. The elastomeric seal contains, according to the invention, rubber. For the preparation of the elastomeric seal any material may be used which is suitable for a vulcanization process and in the vulcanized state has the required properties for such applications. A skilled person knows such materials.

Preferably, the axial distance between the second longitudinal end and the bearing surface is smaller than the axial distance between the first longitudinal end and the bearing surface. It is particularly preferred that the axial distance - i.e. the distance measured along the longitudinal direction or longitudinal axis - between the component-bearing surface and the second longitudinal end of the valve body is less than 10 percent of the total length of the valve body. In this way, when attaching the elastomeric seal on the valve body, a particularly low mechanical stability of the valve body along the longitudinal direction component is required. So the valve closure member can be particularly lightweight and/or cost-efficient.

It is preferred that the valve body is sleeve-shaped. This means in particular that it comprises an internal cavity, such as in particular a central through-opening.

The bearing surface is preferably located at a - particularly staged - constriction of the cavity cross section of the internal cavity. In particular, it shapes the constriction. The inner cavity may advantageously be designed as a central through-opening of the valve body, having a step near the second longitudinal end of the valve body. The step may preferably have a surface - representing the bearing surface - which extends completely circumferentially around the longitudinal axis and faces towards the first longitudinal end. A normal vector which is perpendicular to this surface and is directed away from this surface, is directed in a direction towards the first longitudinal end, at least in part. In this way, the risk of damage to the external surfaces of the valve body when attaching the elastomeric seal can be particularly small. It is also conceivable that the valve body, on its outside, has a recess - in particular a groove extending circumferentially around the longitudinal axis - which is bounded by means of the bearing surface.

In one embodiment, the valve body has at least two outflow openings, which branch off from its inner cavity, in particular in radially outward direction. For example, the valve body has two or four of said outflow openings. Preferably, the constriction of the cavity cross-section which forms the bearing surface is formed between the outflow openings and the second longitudinal end of the valve body. Preferably, the valve body, apart from optionally present outflow openings, is rotationally symmetric. The longitudinal axis is preferably the symmetry axis of the rotational symmetry.

The valve body has an end surface at its second longitudinal end in which an annular recess is formed, preferably concentric to its longitudinal axis. The recess has an annular bottom which is concave - concavely curved in a cross section. In particular, the bottom is torodially shaped. The elastomeric seal has an annular surface having a convexly curved cross-sectional shape by means of which the elastomeric seal is secured to the annular bottom, i.e. in particular is in full-area contact with the annular bottom of the recess. The front face surface of the elastomeric seal on the side facing away from the valve body is concavely curved.

In this way the elastomeric seal may, for example, have a quasi bean-shaped cross-section. The elastomeric seal according to the invention has a uniform thickness of the elastomer layer along its cross-sectional extension as well as two axially projecting sealing edges. The sealing edges are concentric circles. Since the two circular sealing edges have different diameters, an effective double seal or chamber seal to a further component (e.g. of an injection valve for an engine or the like) can be achieved. The double seal is established with the valve seat, the orifice or orifices being positioned radially between the two sealing edges in top view along the longitudinal axis. When the elastomeric seal is pressed onto the valve seat of the valve assembly and thereby deformed, material of the elastomeric seal can move radially into a region which is defined by the concave surface of the elastomeric seal. Thus a particularly good sealing effect can be achieved. Conventional seal shapes without concave front surface have the risk that elastomeric material moving due to the deformation of the elastomeric seal may impair the sealing function when the elastomeric seal is pressed onto the valve seat.

Further advantages and advantageous embodiments and developments of the valve closure member, the valve assembly and the fluid injector will become apparent from the exemplary embodiment described below shown in conjunction with the figures.
In the figures:
Fig. 1 shows a simplified schematic sectional view of a fluid injector with a valve assembly according to the invention and
Fig. 2 shows a simplified schematic sectional view of a valve closure member of the valve assembly of Fig. 1 in more detail.

In the exemplary embodiments and figures, similar, identical or similarly acting elements are provided with the same reference symbols. In some figures, individual reference symbols may be omitted to improve the clarity of the figures. The figures are not regarded to be true to scale. Rather, individual elements in the figures may be exaggerated in size for better representability and/or better understanding.

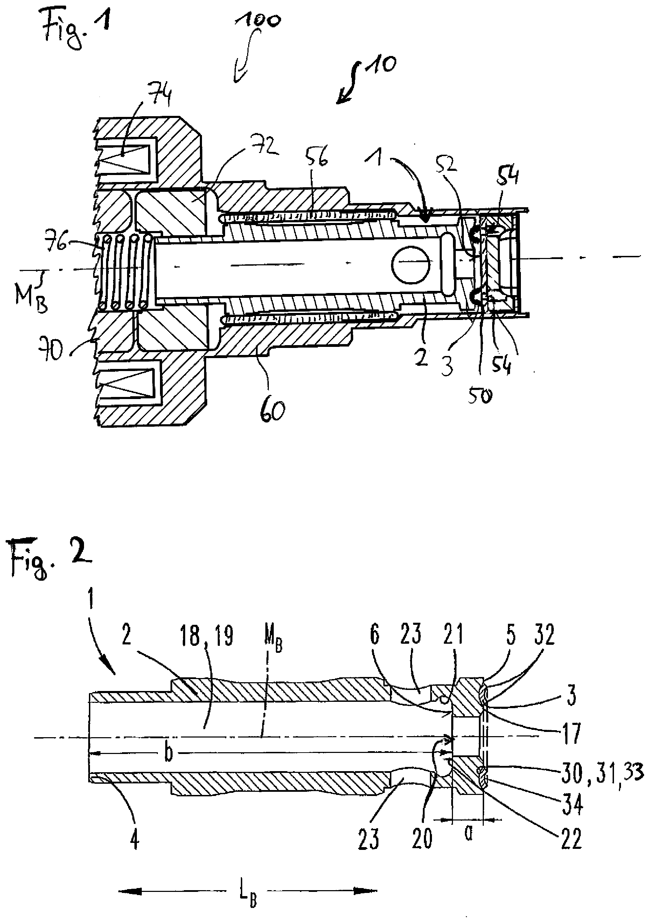

Fig. 1 shows a portion of a fluid injector 100 according to an exemplary embodiment of the invention in a schematic and simplified sectional view. The fluid injector 100 is in particular an injector for injecting gaseous fuels - such as CNG - into an internal combustion engine. The fluid injector 100 may be configured for injecting the fuel into an intake manifold of the engine or directly into a combustion chamber of the engine. The fluid injector 100 comprises a valve assembly 10.

The valve assembly 10 has an orifice disc 50 comprising a valve seat 52 and an orifice 54, specifically a plurality of orifices 54 in the present embodiment. The valve assembly further comprises a fluid tube 60. The orifice disc 50 - and, thus, the valve seat 52 and the orifices 54 - is positionally fix with respect to the fluid tube 60. It is arranged adjacent to an axial end of the fluid tube 60 with respect to a longitudinal axis M_{B} for closing the fluid tube 60 at said axial end.

A valve closure member 1 is received in the fluid tube 60. The valve closure member 1 is movable relative to the fluid tube 60 and, thus, to the valve seat 52 in reciprocating fashion for sealing and unsealing the orifices 54. The valve assembly comprises a guide sleeve 56 positioned in radial direction between the valve closure member 1 and the fluid tube 60 for axially guiding the valve closure member 1 in the fluid tube 60. The valve closure member is shown in more detail in Fig. 2 and described in more detail below.

For displacing the valve closure member 1 away from the valve seat 52, the fluid injector 100 comprises an electromagnetic actuator assembly which comprises a stationary pole piece 70, a movable armature 72 and an electromagnetic coil 74. The armature 72 may, for example, be fixed to the valve closure member 1 or in one piece with the valve closure member 1. The pole piece 70 may expediently be positionally fix with respect to the fluid tube 60.

For displacing the valve closure member 1 towards the valve seat 52, the fluid injector 100 comprises a return spring 76 which bears against the valve closure member 1 and is pre-compressed for biasing the valve closure member 1 against the valve seat 52.

The valve closure member 1 comprises a metal-made valve body 2. It further comprises an elastomeric seal 3 which is arranged at a front end of the valve body 2 and fixed thereto.

The valve body 2 extends along a longitudinal direction L_{B} from a first longitudinal end 4 to a second longitudinal end 5. With respect to the longitudinal direction L_{B}, the valve body 2, the valve assembly 10 and the fluid injector 100 have a common longitudinal central axis, the longitudinal axis M_{B}.

Between the longitudinal ends 4, 5, a bearing surface 6 is formed on the valve body 2, which serves to support the valve body 2 in a vulcanizing die for manufacturing the elastomeric seal 3. The axial distance a between the bearing surface 6 and the second longitudinal end 5 is smaller than the axial distance b between the bearing surface 6 and the first longitudinal end 4, the distance b by slightly more than a factor of ten - i.e. an order of magnitude - larger than the distance a.

In the illustrated embodiment, the valve body 2 is sleeve-shaped, having an internal cavity 18 in the shape of a central through-opening 19. At a first longitudinal end 4 of the valve body 2, the armature 72 is fixed to the valve body 2.

Adjacent to the opposite, second longitudinal end 5, the through-opening 19 has a stepped constriction 20 of the cavity cross-section of cavity 18 of the valve body 2. The constriction 20 is formed in the region of an undercut 21. The constriction 20 extends along the distance a. By means of the constriction 20, a ring surface 22 is shaped, the ring surface 22 facing axially towards the first longitudinal end 4, circumferentially surrounding the through-opening 19 and representing the bearing surface 6. In the present embodiment, the ring surface 22 is perpendicular to the longitudinal axis M_{B}.

The valve body 2 comprises a plurality of outflow openings 23 which perforate a circumferential sidewall of the sleeve-shaped valve body 2 in radial direction. With the exception outflow openings 23, the valve body 2 may preferably be rotationally symmetric with respect to the longitudinal axis M_{B}. The surface of the through-opening 19 and the outer surface of the component 2 thus run concentrically to the longitudinal axis M_{B}.

A front surface 17 of the valve body 2, located at the second longitudinal end 5, comprises an annular recess 30. The recess 30 extends concentrically to the longitudinal axis M_{B} and has an annular bottom 31 which is curved concavely as seen in cross-sections which pass through the longitudinal central axis M_{B}. To put it differently, the bottom 31 is represented by a toroidal surface, in particular in the shape of a portion of an imaginary torus having the longitudinal axis M_{B} as center axis and intersecting a plane which is perpendicular to the longitudinal axis M_{B} and comprises the front surface 17. The portion is in particular the portion of the torus on the side of said plane facing towards the first longitudinal end 4 of the valve body 2.

The annular bottom 31 is in full-area contact with a surface 33 of the elastomeric seal 3 which has a convexly curved cross-sectional shape as viewed in cross-sections which pass through the longitudinal axis M_{B}. By means of said convexly curved surface 33, the elastomeric seal 3 is fixed to the annular bottom 31 of the recess 30 in the front surface 17 of the valve body 2. The elastomeric seal 3 is vulcanized to the bottom 31 of the recess 30 with its convexly shaped surface 33.

A front surface 34 of the elastomeric seal 3, remote from the valve body 2 and facing away from the first longitudinal end 4, is concavely curved. In particular, an annular recess is formed in the elastomeric seal 3 by means of said concavely curved front surface 34. The curvatures of the surfaces 31 and 34 are preferably adapted with respect to their axial distance in such fashion that - with respect to a common imaginary circle center (not shown in the figures) - the radial distance between the surfaces 31 and 34 is identical over the entire cross section of the elastomeric seal 3, in particular with respect to each cross-section which passes through the longitudinal axis M_{B}. To put it differently, the thickness of the elastomeric seal 3 is uniform along its cross-section. In other words, the elastomeric seal 3 has a ring-segment-shaped cross-section, which could also be called "bean-shaped".

By means of the concavely curved front surface 34, the elastomeric seal 3 forms two circular circumferential sealing edges 32 of different diameter, which extend concentrically to the longitudinal axis M_{B} and project axially beyond the front surface 17 of the valve body 2. The convexly curved surface 33, however, expediently overlaps the valve body 2 in axial direction. The sealing edges 32 may expediently located radially inward and radially outward, respectively, with respect to the orifices 54.

In this way, the elastomeric seal 3 is pressed onto valve seat 52 with the two sealing edges 32 - while valve body 2 preferably remains spaced apart from the valve seat 52 - when the valve closure member 1 is in contact with the valve seat 52 for sealing the orifices 54. Due to the pressure - in particular generated by the return spring 76 - which presses the elastomeric seal 3 on the valve seat 52, the elastomeric seal 3 may be deformed. In this case, elastomeric material of the elastomeric seal 3 may move into the annular recess of the elastomeric seal 3 which is shaped radially between the two sealing edges 32 by the concavely curved front surface 34.

## Claims

1. Valve assembly (10) comprising a valve closure member (1), a valve seat (52) and at least one orifice (54), the valve closure member (1) being movable relative to the valve seat (52) for sealing and unsealing the orifice (54), the valve closure member (1) comprising a valve body (2) and an elastomeric seal (3), wherein
- the valve body (2) extends along a longitudinal axis (M_{B}) from a first longitudinal end (4) toward a second longitudinal end (5),
- the valve body (2) has a front surface (17) at its second longitudinal end (5) comprising an annular recess (30) being concentric to the longitudinal axis (M_{B}), said recess (30) having an annular bottom (31) having a concavely curved cross-section,
- the elastomeric seal (3) has an annular surface (33) with a convexly curved cross-sectional shape by means of which the elastomeric seal (3) is secured to the annular bottom (31), and
- a front surface (34) of the elastomeric seal (3), facing away from the valve body (2), has a concavely curved cross-sectional shape,
wherein, by means of the concavely curved front surface (34), the elastomeric seal (3) forms two circular circumferential sealing edges (32) of different diameter, which extend concentrically to the longitudinal axis (M_{B}) and project axially beyond the front surface (17) of the valve body (2), for establishing a double seal to the valve seat (52), and
the at least one orifice (54) is positioned radially between the two sealing edges (32) in top view along the longitudinal axis,
**characterized in that** the elastomeric seal (3) contains rubber, and
wherein the elastomeric seal (3) is vulcanized to the annular bottom (31) of the recess (30) with its convexly shaped annular surface (33), and
wherein the elastomeric seal (3) has a uniform thickness along its cross-sectional extension.

2. The valve assembly (10) according to the preceding claim, wherein an annular recess is formed in the elastomeric seal (3) by means of said concavely curved front surface (34).

3. The valve assembly (10) according to any one of the preceding claims, wherein the distance between said annular bottom (31) and said front surface (34) is identical over the entire cross section of the elastomeric seal (3).

4. The valve assembly (10) according to any one of the preceding claims, wherein the valve body (2) has a bearing surface (6) between its longitudinal ends (4, 5) which faces towards the first longitudinal end (4) of the component (2) and which is oriented perpendicular, inclined or curved to the longitudinal central axis (M_{B}).

5. The valve assembly (10) according to the preceding claim, wherein the valve body (2) is sleeve-shaped and has an inner cavity (18), in particular a central through-opening (19), wherein the bearing surface (6) is formed at a - particularly stage constriction (20) of the cavity (18).

6. The valve assembly (10) according to the preceding claim, wherein at least one outflow opening (23) branches off from the inner cavity (18) in radially outward direction, the constriction (20) of the cavity (18) which shapes the bearing surface (6) is located between the outflow opening (23) and the second longitudinal end (5) of the component (2).

7. The valve assembly (10) according to claim 4, wherein the valve body (2) has a recess at its outer surface, the recess being bordered by the bearing surface (6)

8. The valve assembly (10) according to the preceding claim, wherein said recess is a groove extending circumferentially around the longitudinal central axis (M_{B}).

9. The valve assembly (10) according to any one of the preceding claims, wherein the valve body (2) is a one-pieced metal part.

10. The valve assembly (10) according to any one of the preceding claims, wherein the elastomeric seal (3) is pressed onto valve seat 52 while valve body (2) remains spaced apart from the valve seat (52) when the valve closure member (1) is in contact with the valve seat (52) for sealing the orifice (54).

11. Fluid injector (100) comprising a valve assembly (10) according to any one of claims 1 to 10.

## Patentansprüche

1. Ventilanordnung (10), die ein Ventilverschlusselement (1), einen Ventilsitz (52) und zumindest eine Öffnung (54) aufweist, wobei das Ventilverschlusselement (1) relativ zum Ventilsitz (52) bewegbar ist zum Abdichten und Aufheben der Abdichtung der Öffnung (54), wobei das Ventilverschlusselement (1) einen Ventilkörper (2) und eine elastomere Dichtung (3) aufweist, wobei
- sich der Ventilkörper (2) entlang einer Längsachse (M_{B}) von einem ersten Längsende (4) zu einem zweiten Längsende (5) erstreckt,
- der Ventilkörper (2) eine vordere Oberfläche (17) an seinem zweiten Längsende (5) aufweist, eine ringförmige Vertiefung (30) aufweisend, die konzentrisch mit der Längsachse (M_{B}) ist, wobei die Vertiefung (30) einen ringförmigen Boden (31) mit einem konkav gekrümmten Querschnitt aufweist,
- die elastomere Dichtung (3) eine ringförmige Oberfläche (33) mit einer konvex gekrümmten Form aufweist, mittels der die elastomere Dichtung (3) am ringförmigen Boden (31) gesichert wird, und
- eine vordere Oberfläche (34) der elastomeren Dichtung (3), die vom Ventilkörper (2) weg zeigt, eine konkav gekrümmte Querschnittsform aufweist,
wobei, mittels der konkav gekrümmten vorderen Oberfläche (34), die elastomere Dichtung (3) zwei kreisförmige umlaufende Dichtkanten (32) mit unterschiedlichem Durchmesser bildet, die sich konzentrisch mit der Längsachse (M_{B}) erstrecken und axial über die vordere Oberfläche (17) des Ventilkörpers (2) herausragen, zum Errichten einer Doppeldichtung mit dem Ventilsitz (52), und
wobei die zumindest eine Öffnung (54) radial zwischen den zwei Dichtkanten (32) in der Draufsicht entlang der Längsachse positioniert ist, **dadurch gekennzeichnet, dass**
die elastomere Dichtung (3) Gummi enthält, und wobei die elastomere Dichtung (3) mit ihrer konvex geformten ringförmigen Oberfläche (33) an den ringförmigen Boden (31) der Vertiefung (30) vulkanisiert wird, und
wobei die elastomere Dichtung (3) eine gleichförmige Dicke entlang ihrer Querschnittserstreckung aufweist.

2. Ventilanordnung (10) nach dem vorhergehenden Anspruch, wobei eine ringförmige Vertiefung in der elastomeren Dichtung (3) mittels der konkav gekrümmten vorderen Oberfläche (34) gebildet ist.

3. Ventilanordnung (10) nach einem der vorhergehenden Ansprüche, wobei der Abstand zwischen dem ringförmigen Boden (31) und der vorderen Oberfläche (34) über den gesamten Querschnitt der elastomeren Dichtung (3) identisch ist.

4. Ventilanordnung (10) nach einem der vorhergehenden Ansprüche, wobei der Ventilkörper (2) eine Lageroberfläche (6) zwischen seinen Längsenden (4, 5) aufweist, die in Richtung des ersten Längsendes (4) der Komponente (2) weist und die senkrecht, geneigt oder gekrümmt zur längs verlaufenden mittleren Achse (M_{B}) ausgerichtet ist.

5. Ventilanordnung (10) nach dem vorhergehenden Anspruch, wobei der Ventilkörper (2) hülsenförmig ist und einen inneren Hohlraum (18) aufweist, insbesondere eine mittlere Durchgangsöffnung (19), wobei die Lageroberfläche (6), insbesondere, an einer gestuften Einschnürung (20) des Hohlraums (18) gebildet ist.

6. Ventilanordnung (10) nach dem vorhergehenden Anspruch, wobei zumindest eine Ausflussöffnung (23) vom inneren Hohlraum (18) in radial auswärtiger Richtung abzweigt, wobei die Einschnürung (20) des Hohlraums (18), die die Lageroberfläche (6) formt, zwischen der Ausflussöffnung (23) und dem zweiten Längsende (5) der Komponente (2) befindlich ist.

7. Ventilanordnung (10) nach Anspruch 4, wobei der Ventilkörper (2) eine Vertiefung an seiner äußeren Oberfläche hat, wobei die Vertiefung durch die Lageroberfläche (6) begrenzt wird.

8. Ventilanordnung (10) nach dem vorhergehenden Anspruch, wobei die Vertiefung eine Nut ist, die sich umlaufend um die längs verlaufende mittlere Achse (M_{B}) erstreckt.

9. Ventilanordnung (10) nach einem der vorhergehenden Ansprüche, wobei der Ventilkörper (2) ein einstückiges Metallteil ist.

10. Ventilanordnung (10) nach einem der vorhergehenden Ansprüche, wobei die elastomere Dichtung (3) auf den Ventilsitz 52 gepresst wird, während der Ventilkörper (2) vom Ventilsitz (52) beabstandet bleibt, wenn das Ventilverschlusselement (1) in Kontakt mit dem Ventilsitz (52) ist, um die Öffnung (54) abzudichten.

11. Fluidinjektor (100), eine Ventilanordnung (10) nach einem der Ansprüche 1 bis 10 aufweisend.

## Revendications

1. Ensemble soupape (10) comprenant un élément de fermeture de soupape (1), un siège de soupape (52) et au moins un orifice (54), l'élément de fermeture de soupape (1) pouvant bouger par rapport au siège de soupape (52) pour sceller et desceller l'orifice (54), l'élément de fermeture de soupape (1) comprenant un corps de soupape (2) et un joint d'étanchéité élastomère (3), dans lequel
le corps de soupape (2) s'étend le long d'un axe longitudinal (M_{B}) d'une première extrémité longitudinale (4) vers une seconde extrémité longitudinale (5),
le corps de soupape (2) comporte une surface avant (17) au niveau de sa seconde extrémité longitudinale (5) comprenant un évidement annulaire (30) concentrique à l'axe longitudinal (M_{B}), ledit évidement (30) possédant un fond annulaire (31) présentant une section transversale en courbe concave,
le joint d'étanchéité élastomère (3) comporte une surface annulaire (33) de forme en section transversale en courbe convexe au moyen de laquelle le joint d'étanchéité élastomère (3) est fixé au fond annulaire (31), et
une surface avant (34) du joint d'étanchéité élastomère (3), orientée à l'opposé du corps de soupape (2), présente une forme en section transversale en courbe concave,
dans lequel, au moyen de la surface avant en courbe concave (34), le joint d'étanchéité élastomère (3) forme deux bords de scellement circonférentiels circulaires (32) de différents diamètres, qui s'étendent de façon concentrique vers l'axe longitudinal (M_{B}) et se projettent axialement au-delà de la surface avant (17) du corps de soupape (2), pour établir un double joint d'étanchéité avec le siège de soupape (52), et
l'au moins un orifice (54) est positionné radialement entre les deux bords de scellement (32) vus de dessus le long de l'axe longitudinal,
**caractérisé en ce que**
le joint d'étanchéité élastomère (3) contient du caoutchouc, et
dans lequel le joint d'étanchéité élastomère (3) est vulcanisé sur le fond annulaire (31) de l'évidement (30) avec sa surface annulaire de forme convexe (33), et
dans lequel le joint d'étanchéité élastomère (3) présente une épaisseur uniforme le long de son extension transversale.

2. Ensemble soupape (10) selon la revendication précédente, dans lequel un évidement annulaire est formé dans le joint d'étanchéité élastomère (3) au moyen de ladite surface avant en courbe concave (34).

3. Ensemble soupape (10) selon l'une quelconque des revendications précédentes, dans lequel la distance entre ledit fond annulaire (31) et ladite surface avant (34) est identique sur toute la section transversale du joint d'étanchéité élastomère (3).

4. Ensemble soupape (10) selon l'une quelconque des revendications précédentes, dans lequel le corps de soupape (2) comporte une surface d'appui (6) entre ses extrémités longitudinales (4, 5) qui est orientée vers la première extrémité longitudinale (4) du composant (2) et qui est orientée de manière perpendiculaire, inclinée ou courbe par rapport à l'axe central longitudinal (M_{B}).

5. Ensemble soupape (10) selon la revendication précédente, dans lequel le corps de soupape (2) est en forme de manchon et comporte une cavité interne (18), en particulier une ouverture traversante centrale (19), dans lequel la surface d'appui (6) est formée au niveau d'un resserrement d'étage particulier (20) de la cavité (18).

6. Ensemble soupape (10) selon la revendication précédente, dans lequel au moins une ouverture de trop-plein (23) part de la cavité interne (18) dans une direction radiale extérieure, le resserrement (20) de la cavité (18) qui forme la surface d'appui (6) étant situé entre l'ouverture de trop-plein (23) et la seconde extrémité longitudinale (5) du composant (2).

7. Ensemble soupape (10) selon la revendication 4,
dans lequel le corps de soupape (2) comporte un évidement sur sa surface externe, l'évidement étant encadré par la surface d'appui (6).

8. Ensemble soupape (10) selon la revendication précédente, dans lequel ledit évidement est une rainure s'étendant circonférentiellement autour de l'axe central longitudinal (M_{B}).

9. Ensemble soupape (10) selon l'une quelconque des revendications précédentes, dans lequel le corps de soupape (2) est une pièce métallique intégrale.

10. Ensemble soupape (10) selon l'une quelconque des revendications précédentes, dans lequel le joint d'étanchéité élastomère (3) est pressé sur le siège de soupape (52) tandis que le corps de soupape (2) reste espacé du siège de soupape (52) lorsque l'élément de fermeture de soupape (1) est en contact avec le siège de soupape (52) pour sceller l'orifice (54).

11. Injecteur de fluide (100) comprenant un ensemble soupape (10) selon l'une quelconque des revendications 1 à 10.
